**Europäisches Patentamt**

**European Patent Office**

**Office européen des brevets**

(11) Numéro de publication : **0 384 087 B1**

(12) **FASCICULE DE BREVET EUROPEEN**

(45) Date de publication du fascicule du brevet :
**09.09.92 Bulletin 92/37**

(21) Numéro de dépôt : **89400526.3**

(22) Date de dépôt : **24.02.89**

(51) Int. Cl.⁵ : **F16B 19/08,** B21J 15/04,
**B25B 27/00**

(43) Date de publication de la demande :
**29.08.90 Bulletin 90/35**

(45) Mention de la délivrance du brevet :
**09.09.92 Bulletin 92/37**

(84) Etats contractants désignés :
**AT BE CH DE ES GB GR IT LI LU NL SE**

(56) Documents cités :
**FR-A- 2 026 705**
**FR-A- 2 619 875**
**US-A- 3 838 588**
**US-A- 3 935 786**
**US-A- 4 293 258**

(73) Titulaire : **Badanjak, Claude**
**11, Avenue de Monaco**
**F-93600 Aulnay sous Bois (FR)**

(72) Inventeur : **Badanjak, Claude**
**11, Avenue de Monaco**
**F-93600 Aulnay sous Bois (FR)**

(74) Mandataire : **Faber, Jean-Paul**
**CABINET FABER 35, rue de Berne**
**F-75008 Paris (FR)**

(54) **Rivet et outil pour la pose d'un tel rivet.**

EP 0 384 087 B1

## Description

La présente invention concerne un rivet et un outil destiné à la pose d'un tel rivet.

On connaît des rivets qui sont formés d'un corps cylindrique avec une tête au centre de laquelle s'érige une queue. Ces rivets sont posés en insérant le corps dans un trou préalablement pratiqué dans la pièce à assembler puis, à l'aide d'un outil spécial en exçercant une traction sur la tige afin de provoquer l'expansion de l'extrémité libre du corps pour réaliser la rivure et la rupture de la tige.

Ces rivets sont pratiques et très utilisés, toutefois, ils nécessitent deux opérations, soit le perçage des pièces à assembler et le rivetage.

On connaît également (voir brevet US 3 935 786) des rivets comprenant, d'une part, une tige de section polygonale avec une amorce de rupture et dont une extrémité est terminée par une pointe destinée à perforer les pièces à assembler, un épaulement étant prévu au voisinage de la pointe, et, d'autre part, un corps comprenant un manchon ayant la même section que la tige, engagé sur celle-ci et terminé par une tête.

En faisant tourner la tige, on peut perforer les pièces à assembler par la pointe, puis en exerçant une traction sur ladite tige, on déforme l'extrémité du corps qui porte contre l'épaulement jusqu'à la rupture de la tige.

Une telle disposition est chère, car la tige doit être usinée pour présenter l'épaulement, la pointe etc.. et, le côté du rivet obtenu lors de la traction de la tige est assez volumineux ce qui exclut l'utilisation de tels rivets pour de nombreuses applications. Enfin, la déformation du corps, compte tenu de ses arêtes n'est pas régulière.

L'un des buts de la présente invention est de réaliser un rivet type ci-dessus remédiant à ces divers inconvénients.

Le rivet, selon l'invention, est du type comprenant un corps cylindrique en métal malléable et terminé par une tête hexagonale à une extrémité, ledit corps comportant un canal axial dans lequel est logée une tige en saillie du côté de la tête pour former une queue, ladite tige comportant, à une extrémité libre, des moyens de perçage, des moyens pour provoquer l'épanouissement de l'extrémité libre du corps lorsqu'une traction est effectuée sur la queue et, une gorge pour permettre sa rupture lorsque la résistance à la traction dépasse un seuil déterminé, ledit rivet étant caractérisé en ce que l'extrémité libre de la tige est terminée par un cône comportant le long d'une génératrice au moins une arête tranchante, le cône de ladite extrémité libre de la tige étant raccordée à celle-ci par un tronc de cône, l'extrémité correspondante du canal présentant une conicité correspondante et la gorge étant située au voisinage de la petite base du tronc de cône.

L'invention vise également un outil pour la pose des rivets, selon l'invention.

On connaît, également un outil pour la pose de rivets perçant des trous dans les pièces à assembler qui comprennent un bâti présentant une partie coulissante pourvue de moyens de guidage pour un mandrin porté par une tige pourvue d'un pas de vis rapide. La partie coulissante comporte des moyens pour l'engagement d'un doigt dans le pas de vis de manière que la tige soit écartée rapidement des pièces à assembler (FR-A- 2 026 705).

Une telle disposition nécessite des réglage et, la tige étant reliée directement à une machine tournante, lors de la remontée de la tige, la machine est également déplacée, ce qui est peu pratique.

L'outil, selon l'invention, remédie à ces inconvénients et est du type comprenant un corps comportant à une extrémité une tête avec un logement hexagonal destiné à recevoir la tête du rivet, tandis qu'à l'autre extrémité s'étend un axe destiné à être relié aux mors d'une machine tournante, ledit axe étant relié à une tige solidaire d'un mandrin destiné à enserrer la queue dudit rivet, par des moyens d'accouplement agencés de manière, lorsque les pièces à assembler ont été perforées et traversées par le corps du rivet, à commander le coulissement de la tige dans le corps afin de tirer sur la queue pour provoquer le rivetage et la rupture de ladite queue au droit de la gorge de celle-ci, ledit outil étant caractérisé en ce que l'axe est solidaire d'une douille dans laquelle s'étend la tige qui comporte un filetage à pas rapide, ladite douille comportant des trous dans lesquels sont logées des billes coopérant avec des rampes d'un manchon comportant des moyens conjugués avec des moyens complémentaires de l'axe pour son accouplement avec ce dernier, et monté coulissant dans le corps contre l'action d'un ressort pour pouvoir être désaccouplé de l'axe et commander l'engagement des billes dans le filetage à pas rapide de la tige, ledit manchon étant relié à un patin circulaire circonscrivant la tête de l'outil et mobile axialement pour commander par son appui sur les pièces à assembler le coulissement dudit manchon contre l'action du ressort.

On réalise ainsi un outil très simple avec lequel on perce le trou grâce au rivet et qui forme automatiquement la rivure.

Suivant une caractéristique de détail, le patin circulaire est solidaire d'un cylindre comportant intérieurement des barrettes coopérant avec des doigts traversant des ouvertures latérales du corps et qui portent contre les extrémités libres de barres montées coulissantes dans des perçages du corps parallèle à l'axe longitudinal de celui-ci et dont les autres extrémités coopèrent avec le manchon.

Suivant un détail constructif, le mandrin comporte, du côté opposé à la tête une surface tronconique coopérant avec une conicité correspondante d'une bague logée dans la douille avec interposition d'un ressort de compression inséré entre la bague et un épaulement de ladite douille.

L'invention va maintenant être décrite avec plus de détails en se référant à un mode de réalisation particulier donné à titre d'exemple seulement et représenté aux dessins annexés, dans lesquels :

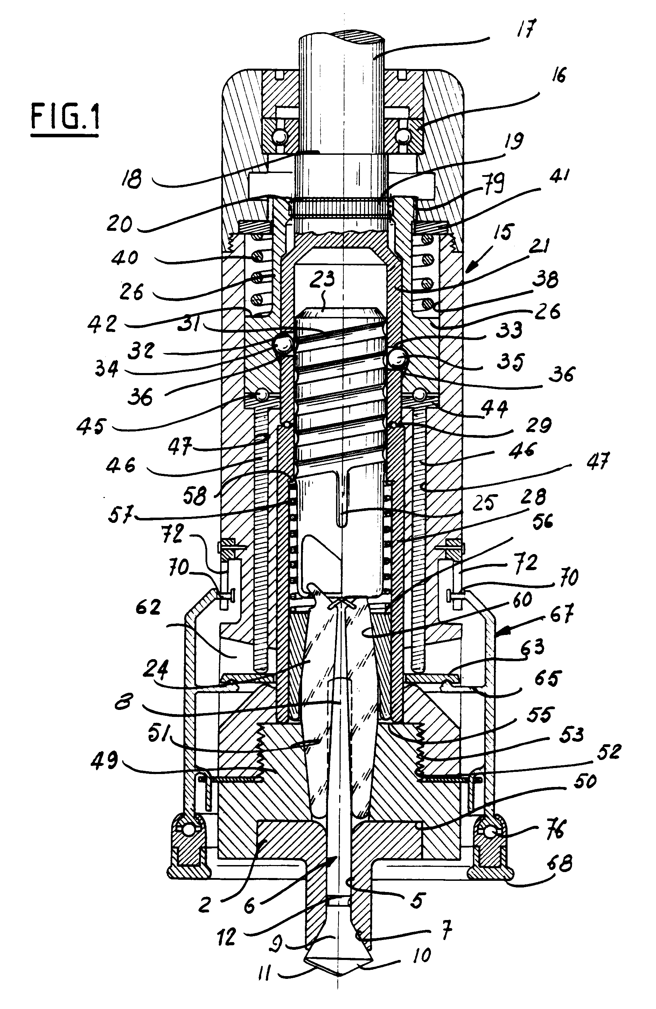

Figure 1 est une vue en coupe par un plan vertical axial de l'outil, selon l'invention.

Figure 2 montre également en coupe l'outil au moment du rivetage.

Figure 3 montre en élévation un rivet, selon l'invention.

Figure 4 montre le rivet après rivure.

Figure 5 montre en plan le rivet, selon l'invention.

Le rivet qui est destiné à être utilisé avec l'outil, selon l'invention comprend un corps cylindrique 1 dont une extrémité est terminée par une tête 2 de préférence hexagonale. Le corps 1 est percé d'un canal axial 5 qui est évasé en forme de tronc de cône 7 à son extrémité opposée à la tête 2, ledit canal 5 étant traversé par une tige 6 dont une extrémité constitue une queue 8 destinée à être enserrée entre des mors, tandis que l'autre extrémité est terminée par un premier tronc de cône 9 destiné à coopérer avec le tronc de cône 7, et à la grande base duquel est accolé, par sa grande base, un tronc de cône 10 dont la génératrice comporte deux arêtes coupantes 11 décalées angulairement de 180° et inclinées dans le même sens. La tige 6 est pourvue, au voisinage du tronc de cône 9, d'une gorge 12 constituant une amorce de rupture.

Le rivet est réalisé en un métal malléable, tandis que la tige est fabriquée en un acier de manière qu'elle puisse se rompre au droit de la gorge à un coefficient de traction déterminé.

L'outil, selon l'invention comprend un corps 15 qui est pourvu à une extrémité d'un palier 16 dans lequel est guidé un axe 17 destiné à être serré entre les mors d'un mandrin d'une machine tournante.

L'axe 17 comporte un épaulement 18 coopérant avec la bague interne du palier 16 et est prolongé par une douille 21, entre l'épaulement 18 et la douille 21 étant prévue une denture 19 coopérant avec une denture correspondante 20 d'un manchon 26.

La douille 21 coopère avec un manchon 28, des billes 29 étant insérées entre l'extrémité correspondante de la douille et ledit manchon 28.

La douille 21 et le manchon 28 sont traversés par une tige 23 pourvue d'un filetage à pas rapide 31, à son extrémité située du côté du fond de la douille 21, tandis que son autre extrémité supporte, articulés, des mors 24 pour le serrage de la queue 8 du rivet.

Le manchon 28 comporte dans sa partie adjacente à la douille 21 une rainure parallèle à son axe longitudinal avec laquelle coopère une arête 25 prévue sur la tige 23.

La douille 21 comporte deux trous 32 et 33 dans lesquels sont logées des billes, respectivement 34, 35 qui coopèrent avec des rampes 36 prévues sur la face correspondante du manchon 26.

Le manchon 26 est guidé dans un alésage 38 du corps 15 et peut coulisser contre l'action d'un ressort de compression 40 interposé entre une bague 41 logée dans le corps et un épaulement 42.

La manchon 26 coopère avec un anneau 44 avec interposition de billes 45, ledit anneau 44 étant solidaire de barres 46 montées coulissantes dans des perçages 47 du corps 15.

Le corps 15, à son extrémité opposé à celle comportant le palier 16, est pourvu d'une tête de réception 49 de la tête 2 du rivet, cette tête comportant un logement 50 de forme hexagonal destiné à recevoir ladite tête 2 et au centre duquel s'ouvre, par sa petite base, un conduit tronconique 51 avec lequel coopèrent les mors 24.

La tête 49 comporte un filetage 53 permettant son vissage dans un taraudage 52 du corps 15. Le manchon 28 est logé dans un alésage 53 du corps 15 et est bloqué entre un épaulement 54 et l'extrémité 55 correspondante de la tête 49.

Dans le manchon 28 est logée une bague 56 qui est poussée contre l'extrémité 55 par un ressort 57 prenant appui sur un épaulement 58 dudit manchon 28.

La bague 56 présente un conduit interne tronconique 60 qui coopère avec une conicité correspondante des mors 24, la grande base du conduit tronconique 60 étant tournée du côté de la grande base du conduit tronconique 51.

Le corps 15 présente des ouvertures latérales 62 dans lesquelles s'étendent des doigts 63 qui portent contre les extrémités libres des tiges 47 et avec lesquels coopèrent des barrettes 65 solidaires d'un cylindre 67 de commande du rivetage.

Le corps 15 comporte une denture 78 qui coopère avec une denture correspondante 79 du manchon 26.

Le cylindre 67 comporte, à son extrémité adjacente à l'extrémité libre de la tête 49, un patin circulaire d'appui 68 et intérieurement des languettes 69 et 70 qui coopèrent avec des guides 71 et 72 respectivement du corps 15. Le patin circulaire 68 est relié au cylindre par l'intermédiaire de billes 68 afin qu'au début, lorsqu'il est appliqué sur une tôle 75, après perforation de celle-ci, le freinage du corps passe progressivement jusqu'à ce que les dentures 19 et 20 se désaccouplent.

Lorsque l'axe 17 étant entraîné en rotation, il entraîne le manchon 26 et le corps 15, par l'intermédiaire des dentures 19,20, 78 et 79, la tige 23 se trouve également entraînée en rotation du fait que les mors 24 sont coincés dans le conduit tronconique 51 de la tête 49, ladite tige 23 entraînant ainsi la tête du rivet 2 qui est bloquée dans le logement horizontal 50. La pointe du cône 10 est appliquée sur la tôle 75 à percer et ses arêtes coupantes 11 pratiquent un trou dans celle-ci.

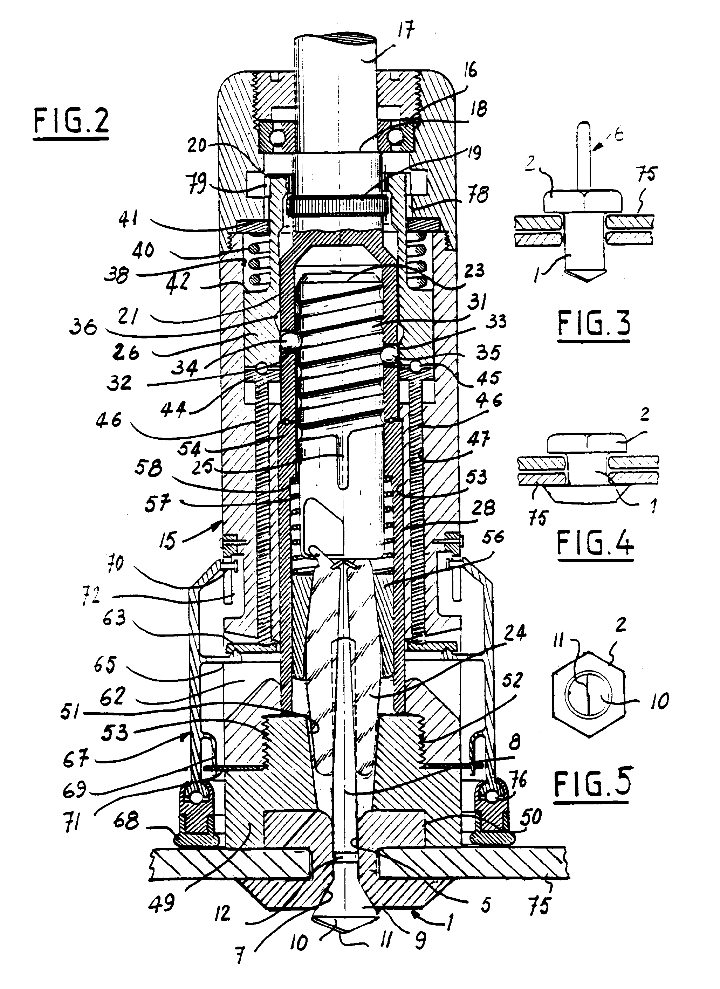

Lorsque le trou est pratiqué (voir figure 2), le patin circulaire vient porter contre la tôle de sorte que le corps 15 est freiné. L'appui du patin 68 engendre un coulissement du cylindre 67 dont les barrettes 65 poussent les doigts 63 qui engendrent un coulissement des barrettes 46 dans les perçages 47 de sorte que, le manchon 26 est déplacé contre l'action du ressort de rappel 40, sa denture 20 échappant, ainsi, à la denture 19 de l'axe 17 tandis que la denture 79 échappe à la denture 78. Ainsi, la rotation du corps 15 est arrêtée.

Le déplacement du manchon 26 dans l'alésage 38 par les rampes 36 commande l'engagement des billes 34-35 dans le filet du pas de vis 31, de sorte que la tige 23 se trouve bloquée par sa saillie 77 qui vient coopérer avec la rainure du manchon 28. Comme la douille 21 continue à tourner, la tige 23 en coopérant par son filetage 31 avec les billes 34 et 35 coulisse de manière à se rapprocher du fond de la douille 21, la queue 8 est donc tirée ce qui entraîne, par le tronc de cône 9, en coopérant avec le canal 5, un épanouissement du corps 1 du rivet (voir figure 2).

Lorsque la traction exercée sur la queue 8 dépasse un seuil déterminé, celle-ci se brise au droit de la gorge 12 dès qu'on écarte le patin de la tôle 75. L'ensemble revient dans la position initiale par l'action du ressort 57.

## Revendications

1°- Rivet du type comprenant un corps cylindrique en métal malléable (1) et terminé par une tête hexagonale (2) à une extrémité, ledit corps (1) comportant un canal axial (5) dans lequel est logée une tige (6) en saillie du côté de la tête pour former une queue (8), ladite tige (6) comportant, à une extrémité libre, des moyens de perçage, des moyens pour provoquer l'épanouissement de l'extrémité libre du corps lorsqu'une traction est effectuée sur la queue (8) et, une gorge (12) pour permettre sa rupture lorsque la résistance à la traction dépasse un seuil déterminé, caractérisé en ce que l'extrémité libre de la tige (6) est terminée par cône (10) comportant le long d'une génératrice au moins une arête tranchante (11), le cône (10) de ladite extrémité libre de la tige (6) étant raccordée à celle-ci par un tronc de cône (9), l'extrémité correspondante du canal (5) présentant une conicité correspondante (7) et la gorge (12) étant située au voisinage de la petite base du tronc de cône (9).

2°- Outil convenant à la pose de rivets pour l'assemblage de deux pièces et tels que définis dans la revendication 1, ledit outil étant du type comprenant un corps (15) comportant à une extrémité une tête (49) avec un logement hexagonal (50) destiné à recevoir la tête (2) du rivet, tandis qu'à l'autre extrémité s'étend un axe (17) destiné à être relié aux mors d'une machine tournante, ledit axe (17) étant relié à une tige (23) solidaire d'un mandrin (24) destiné à enserrer la queue (8) dudit rivet, par des moyens d'accouplement (34, 36) agencés de manière, lorsque les pièces à assembler ont été perforées et traversées par le corps (1) du rivet, à commander le coulissement de la tige (23) dans le corps (15) afin de tirer sur la queue (8) pour provoquer le rivetage et la rupture de ladite queue (8) au droit de la gorge (12) de celle-ci, caractérisé en ce que l'axe (17) est solidaire d'une douille (21) dans laquelle s'étend la tige (23) qui comporte un filetage à pas rapide (31) ladite douille (21) comportant des trous (32 et 33) dans lesquels sont logées des billes (34 et 35) coopérant avec des rampes (36) d'un manchon (26) comportant des moyens conjugués avec des moyens complémentaires de l'axe (17) pour son accouplement avec ce dernier, et monté coulissant dans le corps (15) contre l'action d'un ressort (40) pour pouvoir être désaccouplé de l'axe (17) et commander l'engagement des billes (34, 35) dans le filetage à pas rapide (31) de la tige (23), ledit manchon (26) étant relié à un patin circulaire (68) circonscrivant la tête (49) de l'outil et mobile axialement pour commander par son appui sur les pièces à assembler le coulissement dudit manchon (26) contre l'action du ressort (40).

3°- Outil pour la pose des rivets, selon la revendication 2, caractérisé en ce que patin circulaire (68) est solidaire d'un cylindre (67) comportant intérieurement des barrettes (65) coopérant avec des doigts (63) traversant des ouvertures latérales (62) du corps (15) et qui portent contre les extrémités libres de barres (46) montées coulissantes dans des perçages (47) du corps (15) parallèles à l'axe longitudinal de celui-ci et dont les autres extrémités coopèrent avec le manchon (28).

4°- Outil pour la pose des rivets, selon la revendication 2, caractérisé en ce que le mandrin (24) comporte, du côté opposé à la tête (49) une surface tronconique coopérant avec une conicité correspondante (60) d'une bague (56) logée dans la douille (21) avec interposition d'un ressort de compression (57) inséré entre la bague (56) et un épaulement (58) de ladite douille.

## Patentansprüche

1. Niete, die einen zylindrischen Körper (1) aus verformbarem Metall aufweist und an einem Ende in einem sechseckigen Kopf (2) endigt, wobei der genannte Körper (1) einen axialen Kanal (5) aufweist, in dem ein Bolzen (6) angeordnet ist, der auf der Seite des Kopfes unter Bildung eines Schaftes (8) vorspringt, wobei der genannte Bolzen (6) am einen freien Ende Bohrmittel, Mittel, um die Ausbreitung des freien Endes des Körpers hervorzurufen, wenn eine Zugkraft auf den Schaft (8) ausgeübt wird, und eine Kehle (12) aufweist, um sein Abreißen zu ermöglichen, wenn die Zugkraft einen bestimmten Schwellenwert übersteigt, dadurch gekennzeichnet, daß das freie Ende des Bolzens (6) in einem Kegel (10) endigt, der längs einer Erzeugenden zumindest eine Schneidkante (11) aufweist, wobei der Kegel (10) des genannten freien Endes des Bolzens (6) mit diesem über einen Kegelstumpf (9) verbunden ist, das zugeordnete Ende des Kanals (5) eine entsprechende Konizität (7) aufweist und die Kehle (12) in der Nähe der kurzen Basis des Kegelstumpfes (9) gelegen ist.

2. Werkzeug zum Setzen von Nieten, wie sie für die Verbindung zweier Teile in Anspruch 1 definiert sind, wobei das genannte Werkzeug einen Körper (15) besitzt, der am einen Ende einen Kopf (49) mit einem sechseckigen Sitz (50) aufweist, der zur Aufnahme des Kopfes (2) der Niete bestimmt ist, wohingegen sich am anderen Ende eine Welle (17) erstreckt, die dazu bestimmt ist, mit dem Futter einer Drehantriebsmaschine verbunden zu werden, wobei die genannte Welle (17) mit einer Spindel (23), die mit einem Spannfutter (24) verbunden ist, das zum Festspannen des Schafts (8) der genannten Niete vorgesehen ist, über Kupplungsmittel (34, 36) in Verbindung ist, die in der Weise eingerichtet sind, um, wenn die zu verbindenden Teile durchbohrt und von dem Körper (1) der Niete durchgriffen sind, die Verschiebung der Spindel (23) innerhalb des Körpers (15) so zu steuern, daß auf den Schaft (8) ein Zug ausgeübt wird, um die Vernietung und das Reißen des genannten Schaftes (8) an der Stelle der Kehle (12) hervorzurufen, dadurch gekennzeichnet, daß die Welle (17) mit einer Büchse (21) verbunden ist, in der sich die Spindel (23) erstreckt, die ein Gewinde (31) großer Steigung aufweist, wobei die genannte Büchse (21) Bohrungen (32 und 33) aufweist, in denen Kugeln (34 bzw. 35) sitzen, die mit Rampenflächen (36) einer Hülse (26) zusammenwirken, die Mittel, die mit komplementären Mitteln der Welle (17) gekoppelt sind, um sich an diese anzukuppeln, aufweist und innerhalb des Körpers (15) gegen die Wirkung einer Feder (40) verschiebbar angeordnet ist, um von der Welle (17) abgekuppelt werden zu können und den Eingriff der Kugeln (34, 35) in das Gewinde (31) großer Steigung der Spindel (23) zu steuern, wobei die genannte Hülse (26) mit einer kreisrunden Kufe (68) in Verbindung ist, die den Kopf (49) des Werkzeugs umschreibt und axial beweglich ist, um durch ihre Abstützung auf den zu verbindenden Teilen die Verschiebung der genannten Hülse (26) gegen die Wirkung der Feder (40) zu steuern.

3. Werkzeug für das Setzen von Nieten nach Anspruch 2, dadurch gekennzeichnet, daß die kreisrunde Kufe (68) mit einem Zylinder (67) verbunden ist, der im Innern Stege (65) aufweist, die mit Fingern (63) zusammenwirken, die seitliche Öffnungen (62) des Körpers (15) durchgreifen und sich an den freien Enden von Stäben (46) abstützen, die verschiebbar in Bohrungen (47) des Körpers (15) gelagert sind, die parallel zu dessen Längsachse verlaufen, und deren andere Enden mit der Hülse (26) zusammenwirken.

4. Werkzeug zum Setzen von Nieten nach Anspruch 2, dadurch gekennzeichnet, daß das Spannfutter (24) an der dem Kopf (49) entgegengesetzten Seite eine kegelstumpfförmige Fläche aufweist, die mit einem entsprechenden Konus (60) eines Ringkörpers (56) zusammenwirkt, der in der Büchse (21) sitzt, unter Einschaltung einer Druckfeder (57), die zwischen den Ringkörper (56) und eine Schulterfläche (58) der genannten Büchse eingesetzt ist.

## Claims

1. A rivet of the type comprising a cylindrical body (1) of malleable metal which terminates in a hexagonal head (2) at one end, the said body (1) including an axial channel (5) in which is seated a rod (6) projecting next the head to form a tail (8), the said rod (6) including at a free end means of piercing and means of causing expansion of the free end of the body when traction is exerted on the tail (8), and a neck (12) to enable it to break when the resistance to the traction oversteps a predetermined threshold, characterized in that the free end of the rod (6) terminates in a cone (10) which has along a generatrix at least one cutting edge (11), the cone (10) at the said free end of the rod (6) being connected to the latter by a truncated cone (9) whilst the corresponding end of the channel (5) exhibits a corresponding conicity (7) and the neck (12) is situated in the vicinity of the small base of the truncated cone (9).

2. A tool suitable for placing rivets for the assembly of two parts, the rivets being such as those defined in Claim 1, the said tool being of the type comprising a body (15) having at one end a head (49) with a hexagonal seating (50) intended for receiving the head of the rivet, whilst a shaft (17) extends at the other end, intended for being connected to the jaws of a rotating machine and the said shaft (17) is connected to a rod (23) integral with a chuck (24) intended for gripping the tail (8) of the said rivet, by coupling means (34, 36) which, when the parts to be assembled have been perforated and the body (1) of the rivet has passed through them, are arranged to control the sliding of the rod (23) in the body (15) in order to pull on the tail (8) in order to cause the rivetting and breakage of the said tail (8) at right angles to its neck (12), characterized in that the shaft (17) is integral with a sleeve (21) into which the rod (23) extends with a fast-pitch thread (31) and the said sleeve (21) includes holes (32 and 33) in which are housed balls (34 and 35) cooperating with ramps (36) on a collar (26) which includes means mated with complementary means on the shaft (17) for coupling it to the latter and is mounted to slide in the body (15) against the action of a spring (40) in order to be able to be uncoupled from the shaft (17) and to control the engagement of the balls (34, 35) in the fast-pitch thread (31) on the rod (23), the said collar (26) being connected to a circular shoe (68) circumscribing the head (49) of the tool and movable axially in order by its bearing against the parts to be assembled, to control the sliding of the said collar (26) against the action of the spring (40).

3. A tool for the placing of rivets, as in Claim 2, characterized in that the circular shoe (68) is integral with a cylinder (67) having inside it small bars (65) which cooperate with fingers (63) which pass through openings (62) in the side of the body (15) and bear against the free ends of bars (46) which are mounted to slide in holes (47) drilled in the body (15) in parallel with its longitudinal axis and the other ends of which cooperate with the collar (28).

4. A tool for the placing of rivets, as in Claim 2, characterized in that the chuck (24) includes at the side opossite the head (49) a frustoconical surface which cooperates with a corresponding conicity (60) of a ring (56) housed in the sleeve (21) with the interposition of a compression spring (57) inserted between the ring (56) and a shoulder (58) on the said sleeve.

FIG.1

FIG.2

FIG.3

FIG.4

FIG.5